(19)

**Europäisches Patentamt**
**European Patent Office**
**Office européen des brevets**

(11) **EP 2 422 169 B1**

(12) **EUROPEAN PATENT SPECIFICATION**

(45) Date of publication and mention
of the grant of the patent:
**11.08.2021 Bulletin 2021/32**

(21) Application number: **10767384.0**

(22) Date of filing: **19.04.2010**

(51) Int Cl.:
***G01F 23/00*** *(2006.01)*          ***G01F 23/30*** *(2006.01)*

(86) International application number:
**PCT/SE2010/050419**

(87) International publication number:
**WO 2010/123437 (28.10.2010 Gazette 2010/43)**

(54) **DEVICE AND METHOD FOR DETECTION AND DISPLAY OF FUEL VOLUME IN A TANK ON A VEHICLE**

VORRICHTUNG UND VERFAHREN ZUR ERKENNUNG UND ANZEIGE EINES KRAFTSTOFFVOLUMENS IN EINEM FAHRZEUGTANK

DISPOSITIF ET PROCÉDÉ POUR LA DÉTECTION ET L'AFFICHAGE D'UN VOLUME DE CARBURANT DANS UN RÉSERVOIR DANS UN VÉHICULE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.04.2009  SE 0950265**

(43) Date of publication of application:
**29.02.2012  Bulletin 2012/09**

(73) Proprietor: **Scania CV AB (publ)**
**151 87 Södertälje (SE)**

(72) Inventor: **WALLEBÄCK, Peter**
**121 34 Enskededalen (SE)**

(74) Representative: **Scania CV AB**
**Patents, GP 117kv**
**151 87 Södertälje (SE)**

(56) References cited:
| | |
|---|---|
| **EP-A2- 0 935 126** | **DE-A1- 19 634 813** |
| **GB-A- 2 100 487** | **GB-A- 2 181 873** |
| **US-A- 4 840 056** | **US-A- 5 408 418** |
| **US-A- 5 408 418** | **US-A- 5 483 109** |
| **US-A1- 2006 027 017** | |

**Description**

TECHNICAL FIELD

The present invention relates to a method for detection and viewing of fuel volume in a tank of a motor vehicle. The invention relates also to a computer programme product comprising programme code for a computer for implementing a method according to the invention. The invention relates also to a device for detection and viewing of fuel volume in a tank of a motor vehicle and to a motor vehicle equipped with the device.

BACKGROUND

Drivers of motor vehicles, in particular heavy vehicles such as trucks or buses, do not at present always switch off their vehicle during refuelling in extremely cold environments. In extremely low air temperatures, certain subsystems of the vehicle might quickly freeze up and render the vehicle unusable. This leads to drivers at present refuelling the vehicle with the engine of the vehicle running or ignition of the vehicle switched on.

A control unit of today's vehicles has an algorithm stored in it which is adapted to calculating fuel volume in a tank of the vehicle. In the tank there is a fuel level sensor which sends signals conveying information to the control unit, which can calculate fuel volumes on the basis of the signals received. The algorithm uses a type of filter which reduces unevenness in the signals, which unevenness may be due to jerky behaviour of the fuel level sensor caused by movements of the fuel in the tank. Any fuel level change significantly faster than the decrease caused by fuel consumption is substantially filtered away by the algorithm. For a fuel level change to have a clear effect on the algorithm's output signal, the fuel level sensor has to register a certain heightened fuel level for a relatively long period of time.

The algorithm cannot at present distinguish the fuel level movements which the fuel level sensor detects during refuelling from movements which occur naturally in the fuel otherwise. This leads, during refuelling with the vehicle switched on, to the algorithm taking a very long time to generate an output which corresponds to the actual fuel volume in the vehicle's tank. In certain cases it may take up to twenty minutes for the algorithm to generate an output which corresponds to the actual fuel volume in the vehicle's tank.

Fuel volume may be presented for the driver by a fuel gauge of the vehicle's instrument panel. As it takes such a long time for the algorithm to generate an output corresponding to the actual fuel volume in the vehicle's tank, the instrument panel fuel gauge will also show a substantially much lower fuel volume during the same period of time. The driver of the vehicle may at present find the false fuel volume indication disturbing and irritating in that he/she will not know exactly how much fuel is in the tank until a long time after the refuelling has ended.

A conceivable solution to deal with this disadvantage might involve developing a new algorithm to filter less intensively the signals from the fuel volume sensor. However, this entails development costs which are regarded as too great. Moreover, the filtering such as at present implemented works well during operation, e.g. when the vehicle is in motion on a road.

Another conceivable solution might be to equip the vehicle's tank with more sophisticated and/or more fuel level sensors in order to achieve greater accuracy of the information conveyed by the signals. This solution is also regarded as too expensive and complicated to implement in today's vehicles.

GB 2,181,873 A discloses a method for detection and viewing of fuel volume in a tank of a motor vehicle which deactivates a filtering function when no distance travelled signals are recorded within a certain time period.

US 6,925,855 B2 describes a system for detecting leakage of vapour in the case of a vehicle which is equipped with a fuel system and a control unit. It describes an algorithm which can detect a refuelling state of the system in order to detect vapour leakage.

FR 2786738 describes a system for indication of fuel level in a fuel tank during refuelling of a vehicle.

SUMMARY OF THE INVENTION

An object of the present invention is to propose a new and advantageous method for detection and viewing of fuel volume in a tank of a motor vehicle.

Another object of the invention is to propose a method, a device and a computer programme for detection and viewing of fuel volume in a tank of a motor vehicle.

A further object of the invention is to propose a method, a device and a computer programme for achieving more robust detection and viewing of fuel volume in a tank of a motor vehicle.

A further object of the invention is to propose a method, a device and a computer programme for achieving more accurate detection and viewing of fuel volume in a tank of a motor vehicle during refuelling.

These objects are achieved with a method for detection and viewing of fuel volume in a tank of a motor vehicle according to claim 1.

An aspect of the invention is a proposed method for detection and viewing of fuel volume in a tank of a motor vehicle, which method comprises the steps of:

- generating information comprising fuel volumes in said tank,
- providing a filtering function to equalise variations of said information generated, and
- responding to a predetermined amount of deviation between the information generated and corresponding filtered information by deactivating said filtering function. The method comprises also the step of
- reactivating said filtering function on the basis of a speed of the vehicle.

Vehicles today are provided with a vehicle speed sensor which can send to a control unit of the vehicle a signal which can reactivate said filtering function when a detected speed of the vehicle exceeds a predetermined value, e.g. 5 km/h. When the vehicle is in motion, the refuelling may be regarded as completed. With advantage, automatic reactivation of said filtering function is thus effected. According to this version, a single speed sensor already present is used, providing a cost-effective way of reactivating said filtering function.

It should be noted, however, that the method for detection and viewing of fuel volume in a tank of a motor vehicle may be effected during refuelling when the vehicle is in motion, if this would be desirable.

With advantage, it is made possible for the driver, a short time after the completion of refuelling with the vehicle's engine running or an ignition of the vehicle switched on, to be able to obtain information about how much fuel is in the tank by reading the fuel gauge of the vehicle's instrument panel.

The method is easy to implement in existing motor vehicles. Software for detection and viewing of fuel volume in a tank of a motor vehicle according to the invention may be installed in a control unit of the vehicle during the manufacture of the vehicle. A purchaser of the vehicle may thus have the possibility of choosing the method's function as an option. Alternatively, software comprising programme code for effecting the innovative method for detection and viewing of fuel volume in a tank of a motor vehicle may be installed in a control unit of the vehicle on the occasion of upgrading at a service station. In that case, the software may be loaded into a memory in the control unit. Implementing the innovative method is therefore cost-effective, particularly as no further fuel level sensors need be installed in the vehicle's fuel tank according to an aspect of the invention. Necessary hardware is currently already provided in the vehicle. The invention therefore represents a cost-effective solution to the problems indicated above.

Software which comprises programme code for detection and viewing of fuel volume in a tank of a motor vehicle can easily be updated or replaced. Moreover, various parts of the software which comprises programme code for detection and viewing of fuel volume in a tank of a motor vehicle may also be replaced independently of one another. This modular configuration is advantageous from a maintenance perspective.

The method may further comprise the step of reactivating said filtering function after a predetermined period of time from said filtering function having been deactivated. This period of time may be determined arbitrarily. It may for example be five minutes. With advantage, automatic reactivation of said filtering function is thus effected. This version uses only a speed sensor which is already present, providing a cost-effective way of reactivating said filtering function.

The method may further comprise the step of temporarily reactivating said filtering function to detect an updated deviation between the information generated and corresponding filtered information. According to this version, the filtered signal may be zeroed when a refuelling state is detected.

The method may further comprise the step of reaching said predetermined amount of deviation between the information generated and corresponding filtered information during refuelling of the vehicle.

The deviation between the information generated and corresponding filtered information may be supplied to a CUSUM algorithm to make it possible to determine a refuelling state. When refuelling of the vehicle is detected, a filtering function used to equalise variations of the signals which contain information about fuel volume may be deactivated.

The CUSUM algorithm is not limited to being used for a specific fuel level algorithm which is available today, but is usable for various already existing fuel level algorithms and for future ones. The CUSUM algorithm is adapted to generating a signal which indicates that refuelling is proceeding and to sending this signal to appropriate systems of the vehicle which have use for such information.

The CUSUM algorithm is not limited to being used for a certain tank type but may be used for various tank types of a plurality of different types of vehicles. This means that implementing a CUSUM algorithm according to an aspect of the invention is flexible.

The method may further comprise the step of displaying the first information for a driver of the vehicle when said filtering function is deactivated. Displaying values based on raw data signals representing fuel volumes in the vehicle's fuel tank when said filtering function is deactivated makes it possible for a driver to have more exact information about actual fuel volume. The raw data signals may be generated by the fuel level sensor present in the vehicle's fuel tank.

The method may further comprise the step of displaying the filtered information for a driver of the vehicle when the filtering function is activated or reactivated. Displaying the filtered information means that temporary variations of the fuel level in the fuel tank will not be presented for the driver. The driver may find a fuel gauge which exhibits jerky behaviour disturbing. This version greatly reduces such jerky behaviour of the fuel gauge.

Likewise, if a fuel volume in the vehicle's fuel tank is displayed in the form of digital numerals representing that volume, no major deviations will occur.

It should be noted that alternative information representing fuel volumes in the vehicle's fuel tank, alternative to the filtered information, may be displayed for the driver. This alternative information may be generated on the basis of the filtered information. This alternative information may be filtered in any desired way. In practice, the alternative information and the filtered information would be quite similar, since both of them represent the actual fuel volume present in the vehicle's fuel tank.

The filtering function may be configured to calculate a mean value for a predetermined period of time of said information generated. Alternatively, the filtering function may be configured to calculate a median value for a predetermined period of time of said information generated. The filtering function may be configured to calculate any desired value for a predetermined period of time of said information generated in order to achieve equalisation of variations in the raw data signals generated by the fuel level sensor.

An aspect of the invention is a proposed device for detection and viewing of fuel volume in a tank of a motor vehicle. The device comprises:

- means for generating information comprising fuel volume in said tank,
- means for providing a filtering function to equalise variations in said information generated,
- means for responding to a predetermined amount of deviation between the information generated and corresponding filtered information by deactivating said filtering function, and
- means for reactivating said filtering function on the basis of a speed of the vehicle. The vehicle's speed may be detected by a speed sensor and be sent to means for reactivating said filtering function.

The device may further comprise means for reactivating said filtering function after a predetermined period of time from said filtering function having been deactivated. The period of time may be determined by an internal clock of a control unit of the vehicle.

The device may further comprise means for temporarily reactivating said filtering function to detect an updated deviation between the information generated and corresponding filtered information. Said predetermined amount of deviation between the information generated and corresponding filtered information is reached during refuelling of the vehicle. The deviation between the information generated and corresponding filtered information may be supplied to a CUSUM algorithm to make it possible to determine a refuelling state.

The device may further comprise means for displaying the first information for a driver of the vehicle when said filtering function is deactivated.

The device may further comprise means for displaying the filtered information for a driver of the vehicle when the filtering function is activated or reactivated.

The filtering function may be configured to calculate a mean value for a predetermined period of time of said information generated.

The above objects are also achieved with a motor vehicle which comprises the device for detection and viewing of fuel volume in a tank of a motor vehicle. The motor vehicle may be a truck, bus or passenger car.

An aspect of the invention is a proposed computer programme for detection and viewing of fuel volume in a tank of a motor vehicle, which computer programme comprises programme codes stored on a computer-readable medium for causing an electronic control unit or another computer connected to the electronic control unit to perform the steps according to any one of claims 1-8. An aspect of the invention is a proposed computer programme product comprising a programme code stored on a computer-readable medium for performing the method steps according to any one of claims 1-8 when said computer programme is run on an electronic control unit or another computer connected to the electronic control unit.

Further objects, advantages and novel features of the present invention will become apparent to one skilled in the art from the following details, as also by applying the invention. Although the invention is described below, it should be noted that it is not limited to the specific details described. Specialists having access to the teachings therein will recognise further applications, modifications and incorporations within other fields, which are within the scope of the invention.

BRIEF DESCRIPTION OF THE DRAWINGS

Fuller understanding of the present invention and further objects and advantages of it may be gathered from the following detailed description read in conjunction with the accompanying drawings, in which the same reference notations pertain to similar parts of the various drawings, and in which:

Figure 1 illustrates schematically a vehicle according to an embodiment of the invention;
Figure 2 illustrates schematically a subsystem for the vehicle depicted in

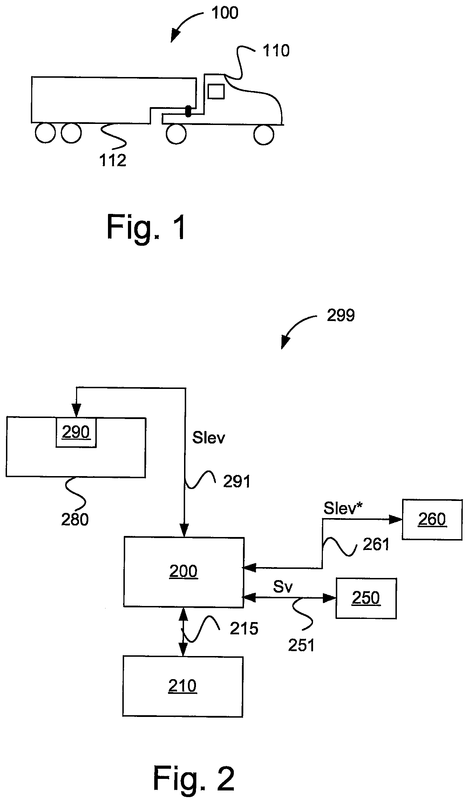

Figure 1, according to an embodiment of the invention,

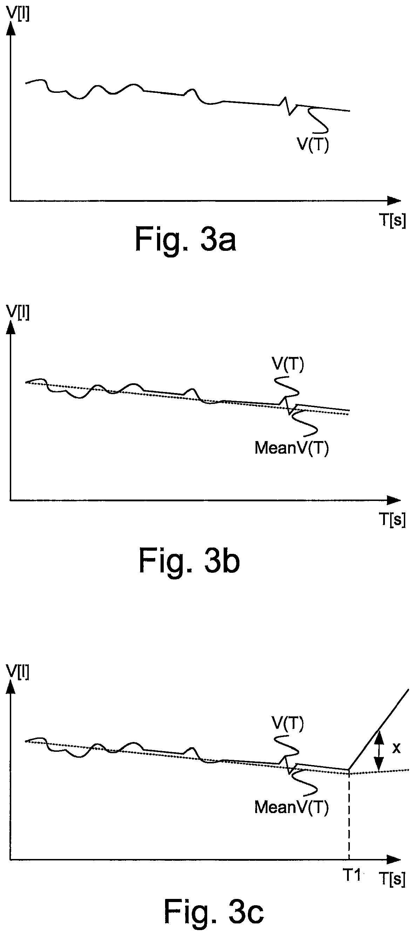

Figure 3a is a schematic diagram in which fuel volume depends on time;
Figure 3b is a schematic diagram in which fuel volume and a fuel volume mean value depend on time;
Figure 3c is a schematic diagram in which fuel volume and a fuel volume mean value depend on time;

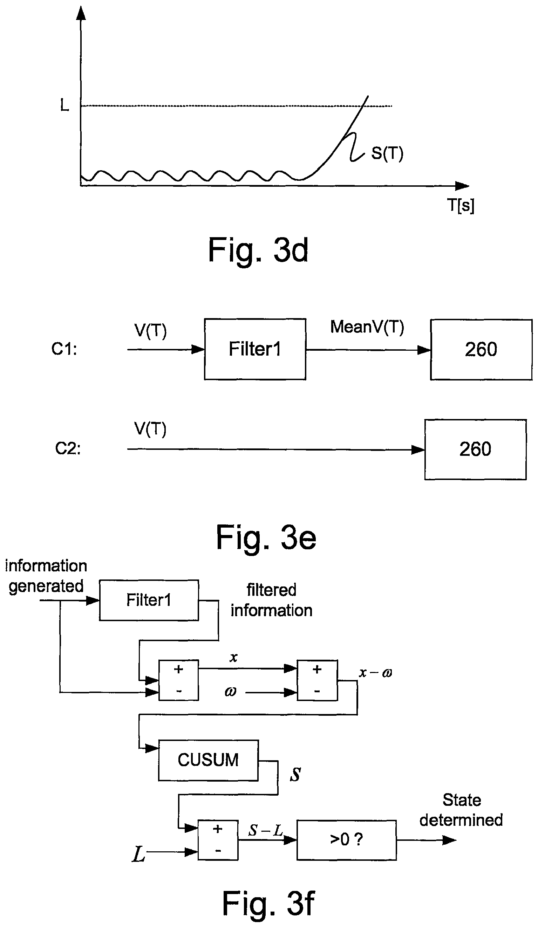

Figure 3d illustrates schematically an output signal from a CUSUM algorithm, according to an embodiment of the invention;
Figure 3e illustrates schematically a state model, according to an embodiment of the invention;
Figure 3f illustrates schematically an algorithm for detecting a state of the vehicle's fuel tank, according to an embodiment of the invention;

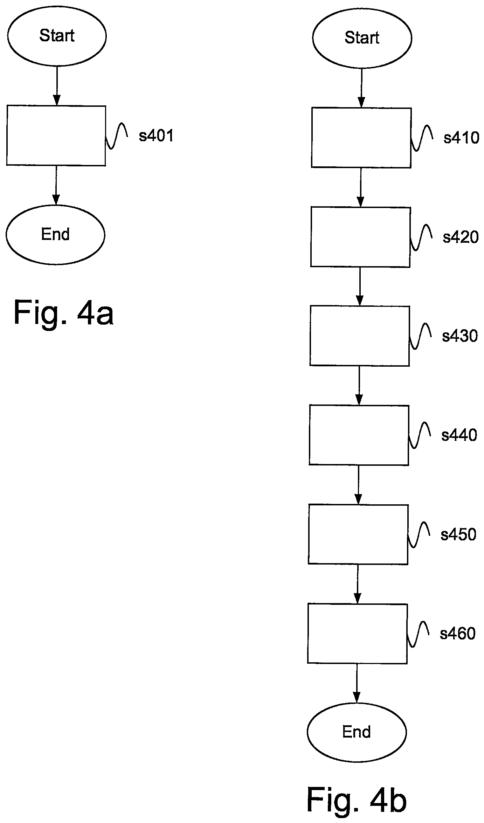

Figure 4a is a schematic flowchart of a method according to an embodiment of the invention;
Figure 4b is a schematic flowchart in more detail of a method according to an embodiment of the invention; and

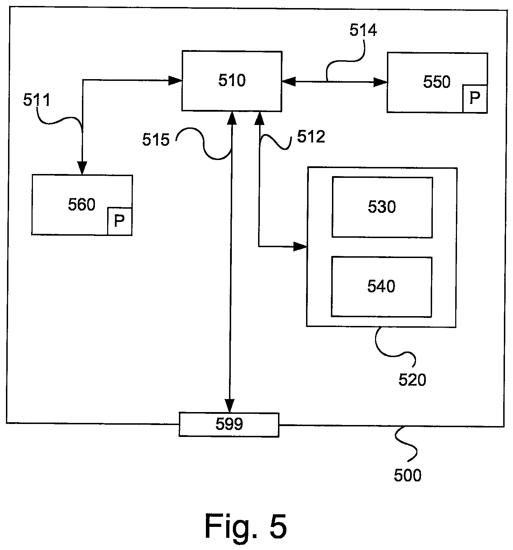

Figure 5 illustrates schematically a computer according to an embodiment of the invention. '

## DETAILED DESCRIPTION OF THE DRAWINGS

Figure 1 depicts a side view of a vehicle 100. The exemplified vehicle 100 comprises a tractor unit 110 and a trailer 112. The vehicle may be a heavy vehicle, e.g. a truck or a bus. The vehicle may alternatively be a passenger car.

The term "link" refers herein to a communication link which may be a physical line such as an opto-electronic communication line, or a non-physical line such as a wireless connection, e.g. a radio wave or microwave link.

Figure 2 depicts a subsystem 299 of the vehicle 100. The subsystem 299 is situated in the tractor unit 110. The subsystem 299 comprises a fuel tank 280 of conventional type. The fuel tank may be of the order of magnitude of 500-800 litres.

The fuel tank 280 is equipped with a level sensor 290 adapted to measuring a level of fuel which is present in the fuel tank. The fuel may for example be diesel fuel or petrol. The level sensor 290 is adapted to communication with a first control unit 200 of the vehicle via a link 291. The vehicle 100 also has equipment (not depicted) for supplying the fuel to an engine of the vehicle. The level sensor 290 is adapted to detecting instantaneous fuel levels and sending signals Slev containing information comprising these detected measured values. The detected measured values are also referred to as raw data. The sensor 290 is adapted to detecting the fuel level in the tank 280 and to sending the signals Slev at any desired frequency. An example of a frequency may be once per second. An example of another frequency may be once per 30 seconds.

According to a version, the first control unit 200 is adapted to using the signals received concerning detected fuel levels in the vehicle's tank as a basis for converting the values which represent fuel levels to corresponding fuel volumes.

A second control unit 210 is adapted to communication with the first control unit 200 via a link 215. The second control unit 210 may be detachably connected to the first control unit 200. The second control unit 210 may be a control unit external to the vehicle 100. The second control unit 210 may be adapted to performing the innovative method steps according to the invention. The second control unit 210 may be used to cross-load software to the first control unit 200, in particular software for effecting the innovative method. The second control unit 210 may alternatively be adapted to communication with the first control unit 200 via an internal network in the vehicle. The second control unit 210 may be adapted to performing functions substantially similar to the first control unit 200, e.g. to using the signals received concerning fuel levels detected in the vehicle's tank as a basis of converting values which represent the fuel levels to corresponding fuel volumes.

The first control unit 200 is adapted to communication with a speed sensor 250 via a link 251. The speed sensor 250 is adapted to detecting an instantaneous speed of the vehicle 100. The speed sensor 250 is adapted to sending signals Sv containing information about instantaneous speeds of the vehicle to the first control unit 200. The speed sensor 250 is adapted to detecting instantaneous speeds of the vehicle and sending the signals Sv at any desired frequency. An example of frequency may be once per second.

The first control unit 200 is adapted to communication with a viewing device 260 via a link 261. The first control unit 200 is adapted to sending the signals Slev* containing information about current fuel level in the fuel tank 280 to the viewing device 260. The viewing device 260 is adapted to receiving the signals Slev* and to presenting information about current fuel level in the fuel tank 280 for a driver of the vehicle. The viewing device may be of any desired kind.

According to an example, the viewing device is a conventional fuel gauge which has a pointer and a scale covering a range between a first position corresponding to a state in which the vehicle's fuel tank is empty and a second position corresponding to a state in which the vehicle's fuel tank is full.

According to another example, the viewing device 260 is a screen which can display alphanumeric characters whereby a current fuel volume of the fuel tank can be indicated in digital form.

The first control unit 200 is provided with a first filter Filter1 which filters the signals Slev received. An example of a filter is a first-order low-pass filter. The first filter Filter1 may be adapted to calculating a mean value based on the information about current fuel level of the fuel tank from any desired number of the signals Slev received. The first filter Filter1 may be adapted to calculating a mean value based on any desired number of calculated fuel volumes of the fuel tank.

The first control unit 200 is adapted to determining a difference x between any desired value representing fuel volume of the fuel tank and a corresponding filtered value representing fuel volume of the fuel tank. The corresponding filtered value representing fuel volume of the fuel tank may be the calculated mean value.

The first control unit 200 is provided with a second filter. The second filter comprises a CUSUM algorithm. The CUSUM algorithm is adapted to determining a state of the fuel tank on the basis of the values received which represent the difference x between any desired value representing fuel volume of the fuel tank and a corresponding filtered value representing fuel volume of the fuel tank. The state of the fuel tank may be either refuelling proceeding or refuelling not proceeding. For the CUSUM algorithm to determine that the state is refuelling proceeding, this input signal (comprising the difference x) has to be positive any desired number of times within a predetermined period of time. An example which may be cited is that a state of the vehicle's fuel tank may be determined if detected fuel volumes of the fuel tank continuously increase relative to their calculated mean value.

If the CUSUM algorithm finds that the state of the fuel tank is that refuelling is proceeding, measures are adopted by the first control unit 200. If the state of the fuel tank is that refuelling is proceeding, the first control unit 200 is adapted to deactivating the first filter Filter1 and to sending signals containing information about detected fuel volumes in the fuel tank to the viewing device 260 for presentation. If the state of the fuel tank is that refuelling is not proceeding, the first control unit 200 is adapted to reactivating the first filter Filter1 and to keeping the first filter Filter1 in an active state and to sending signals containing filtered information about detected fuel volumes in the fuel tank, e.g. comprising a mean value of or median value of detected fuel volume in the fuel tank, to the viewing device 260 for presentation.

Figure 3a is a schematic diagram of an example in which fuel volume V of the vehicle's fuel tank is plotted against time T. Fuel volume may be indicated in litres. Time T may be indicated in seconds.

The curve V(T) depicted is a raw data signal comprising data generated by the fuel level sensor 290 (see Figure 2). The information about fuel levels in the fuel tank which is comprised in the signals Slev may be converted to corresponding values for fuel volumes in the fuel tank. The irregularities in fuel volume which appear in the diagram may be caused by natural splashing of the fuel in the fuel tank.

Figure 3b is a schematic diagram of an example showing an accumulated mean value MeanV(T) for the raw data signal. The mean value MeanV(T) may be calculated by the first filter Filter1 of the first control unit 200.

Another example would illustrate a median value for the raw data signal. The median value may be calculated by the first filter Filter1 of the first control unit 200.

A further example would illustrate any desired filtered value for the raw data signal. Any desired filtered value may be calculated by the first filter Filter1 of the first control unit 200.

Figure 3c is a schematic diagram of an example in which a sudden increase in fuel value V takes place, starting at a time T1. The value of the raw data signal V(T) increases markedly after time T1, but the mean value MeanV(T) for the raw data signal V(T) does not increase correspondingly.

According to the invention, a difference x is calculated between the raw data signal V(T) and the mean value MeanV(T). If this difference x exceeds a predetermined amount a certain number of times during a predetermined period of time, it may be found that the vehicle is being refuelled. This is determined by the CUSUM algorithm according to an aspect of the present invention. If refuelling is detected, the first filter Filter1 is deactivated and the raw data signal V(T) is used as input to the viewing means 260 for display of fuel volumes in the vehicle's fuel tank.

Figure 3d illustrates schematically an output signal S(T) from the CUSUM algorithm according to an aspect of the present invention.

A signal x(t) is defined as the difference between the raw data signal V(T) and the filtered raw data signal, e. g. MeanV(T), taking a weighting $\omega$ into account.

$$x(T)=V(T)-MeanV(T);$$

$$S(T)=max(S(T-1) +x(T)-\omega, 0); \omega =weighting$$

If S(T)>x, the CUSUM algorithm will detect a refuelling state, in which case the raw data signal V(T) will be displayed by the viewing device 260, according to an embodiment of the present invention.

Figure 3e illustrates schematically a state model comprising a first state C1 and a second state C2. The first state C1 represents a state in which refuelling of the vehicle is not found. The second state C2 represents a state in which refuelling of the vehicle is found.

In the first state C1, the raw data signal V(T) is filtered by the first filter Filter1 and the filtered raw data signal is displayed by the vehicle's viewing device 260. In the second state C2, the raw data signal V(T) is displayed by the vehicle's viewing device 260.

An embodiment according to an aspect of the invention is described below with reference to Figure 3f.

CUSUM is a sequential analysis technique usable for detecting deviations in the behaviour of time-discrete values read from a signal. CUSUM is usable for applications which do not have access to all of the data which are to be analysed, but analyse instead the behaviour of the values on-line. Sequential analysis means that the amount of data is not predetermined but is analysed on-line. The distribution of the values in the signal analysed may be compared with a predefined distribution. When a deviation is detected, necessary measures are applied to the processes which depend on the signal analysed. CUSUM stands for cumulative sum, which means that data are summated on-line according to the process

$$S_0 = 0$$

$$S_{n+1} = \max(0, S_n + x_n - \omega_n)$$

The output signal S from the above process is compared with an algorithm against a predefined level called L. If the level is passed, CUSUM has detected a change in the observed values of x. A weighting $\omega$ may be indicated which renders the algorithm using the CUSUM process less sensitive to changes in the observed values of x. The weighting may be constant or be changed every time for each iteration of the algorithm. The values of x read in are directly affected by $\omega$. If $\omega$ is positive, more values of x which deviate from normal behaviour will be required for the results of the algorithm to indicate a change.

The algorithm may have the following steps:

1) Read in the latest value of $x_n$

2) Update the weighting $\omega_n$ if it is not constant

3) Update S according to the above equation

4) Compare S with the predefined level L

5) If S exceeds the level L, the values of x deviate from their normal distribution and suitable measures may be adopted

According to a version, x is the difference between the information generated and corresponding filtered information.

The weighting $\omega$ may be constant but may alternatively depend on the information generated about fuel volume and/or the filtered information about fuel volume and/or tank shape. The weighting may be set to a suitable constant which results in reduction of the sensitivity of the algorithm, i.e. reduces the risk of incorrectly detecting a refuelling state.

The level L with which S is compared in the algorithm above may be preset to a constant. L may be set to a constant level which is a balance between rapid detection and minimising the risk of falsely determining a refuelling state.

If S exceeds L, it is possible to adopt suitable measures which comprise displaying certain information about the amount of fuel in the vehicle's fuel tank when a refuelling state of the vehicle is detected.

Figure 3f illustrates schematically an algorithm for detection of refuelling of a motor vehicle according to an aspect of the present invention. This embodiment is described in more detail above.

Figure 4a is a schematic flowchart of a method for detection and viewing of fuel volume in a tank of a motor vehicle, according to an embodiment of the invention. The method comprises a first method step s401 which itself comprises the steps of:

- generating information concerning fuel volumes in said tank, and
- providing a filtering function to equalise variations of said information generated. Step s401 also comprises the step of:
- responding to a predetermined amount of deviation between the information generated and corresponding filtered information by deactivating said filtering function. After step s401 the method ends.

Figure 4b is a schematic flowchart of a method for detection and viewing of fuel volume in a tank of a motor vehicle, according to an embodiment of the invention.

The method comprises a first step s410 comprising the step of detecting a fuel level of the fuel in the vehicle's fuel tank and generating a signal containing this information. Step s410 is followed by a method step s420.

Method step s420 comprises the step of converting the information about detected fuel level of the fuel in the fuel tank to corresponding fuel volume of the fuel tank and generating a signal containing this information. Step s420 is followed by a step s430.

Method step s430 comprises the step of filtering the signal containing information about fuel volume of the fuel tank and generating a signal containing this filtered information. Step s430 is followed by a step s440.

Method step s440 comprises the step of comparing the signal containing information about fuel volume of the fuel tank with the signal containing the filtered information in order to determine a difference between these two signals. Step s440 is followed by a step s450.

Method step s450 comprises the step of supplying this difference as input to a CUSUM algorithm adapted to determining a state on the basis of this difference between the two signals. This state may be a first state in which refuelling of the vehicle is not proceeding or a second state in which refuelling of the vehicle is proceeding. Step s450 is followed by step s460.

Method step s460 comprises the step of displaying information about fuel volume on the basis of the state determined. If the first state is found, the filtered information concerning fuel volume of the vehicle's fuel tank is displayed. If the second state is found, the unfiltered information concerning fuel volume of the vehicle's fuel tank is displayed. After step s460 the method ends.

Figure 5 is a diagram of a version of a device 500. The control units 200 and 210 described with reference to Figure 2 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A computer programme P is provided which comprises routines for determining a refuelling state of the motor vehicle 100 in order in response thereto to activate or reactivate a first filter Filter1 to make it possible to present fuel volumes of the vehicle's fuel tank according to the innovative method. The programme P comprises routines for generating information concerning fuel volumes in the vehicle's fuel tank and for providing a filtering function to equalise variations of said filtered information. The programme P comprises routines for responding to a predetermined amount of deviation between the information generated and the filtered information by deactivating said filtering function, in accordance with the innovative method. The programme P may be stored in an executable form or in compressed form in a memory 560 and/or in a read/write memory 550.

Where it is stated that the data processing unit 510 performs a certain function, it means that the data processing unit 510 effects a certain part of the programme which is stored in the memory 560 or a certain part of the programme which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is intended to communicate with the data processing unit 510 via a data bus 514. The links 291, 251, 261, and 215, for example, may be connected to the data port 599 (see Figure 2).

When data are received on the data port 599, they are stored temporarily in the second memory element 540. When input data received have been temporarily stored, the data processing unit 510 will be ready to effect code execution in a manner described above. According to a version, signals received on the data port 599 contain information about fuel levels in the vehicle's fuel tank. According to a version, signals received on the data port 599 contain information about speeds of the vehicle. According to a version, signals sent to the viewing unit 260 from the data port 599 contain information about detected fuel volumes (raw data) of the fuel tank or information about filtered fuel volumes (e.g. mean value for detected fuel volume). The signals received on the data port 599 may be used by the device 500 to calculate a corresponding fuel volume of the vehicle's fuel tank.

Parts of the methods herein described may be effected by the device 500 by means of the data processing unit 510 which runs the programme stored in the memory 560 or the read/write memory 550. When the device 500 runs the programme, the methods herein described are executed.

The foregoing description of the preferred embodiments of the present invention is provided for illustrative and descriptive purposes. It is not intended to be exhaustive or to limit the invention to the variants described. Many modifications and variants will obviously be apparent to one skilled in the art. The embodiments have been chosen and described in order best to make clear the principles of the invention and its practical applications and hence to make it possible for specialists to understand the invention for various embodiments and with the various modifications appropriate to the intended use.

**Claims**

1.  A method for detection and viewing of fuel volume in a tank (280) of a motor vehicle (100; 110), comprising the steps of:

    - generating information (V(T)) concerning fuel volumes in said tank,
    - providing a filtering function (Filter1) to equalise variations of said information generated,
    - responding to a predetermined amount of deviation (x) between the information generated and corresponding filtered information deactivating said filtering function (Filter1),
    **characterised by** the step of
    - reactivating said filtering function (Filter1) on the basis of a speed of the vehicle.

2.  A method according to claim 1, further comprising the step of:

    - reactivating said filtering function (Filter1) after a predetermined period of time from said filtering function (Filter1) having been deactivated.

3.  A method according to either of claims 1 and 2, further comprising the step of

    - temporarily reactivating said filtering function (Filter1) to detect an updated deviation (x) between the information generated and corresponding filtered information.

4.  A method according to any one of the foregoing claims, further comprising the step of:

    - reaching said predetermined amount of deviation (x) between the information generated and corresponding filtered information during refuelling of the vehicle.

5.  A method according to any one of the foregoing claims, in which the deviation (x) between the information generated and corresponding filtered information is supplied to a CUSUM algorithm to make it possible to determine a refuelling state (C2).

6.  A method according to any one of the foregoing claims, further comprising the step of:

    - displaying the information for a driver of the vehicle when said filtering function (Filter1) is deactivated.

7.  A method according to any one of the foregoing claims, further comprising the step of:

    - displaying the filtered information for a driver of the vehicle when said filtering function (Filter1) is activated or reactivated.

8.  A method according to any one of the foregoing claims, in which the filtering function (Filter1) is configured to calculate a mean value (MeanV(T)) for a predetermined period of time of said information generated.

9.  A device for detection and viewing of fuel volume in a tank (280) of a motor vehicle (100; 110), comprising:

    - means (290; 200; 210) for generating information concerning fuel volumes in said tank (280),
    - means (200; 210; 500) for providing a filtering function (Filter1) to equalise variations of said information generated,
    - means (200; 210; 500) for responding to a predetermined amount of deviation (x) between the information generated and corresponding filtered information by deactivating said filtering function (Filter1),
    **characterised by**
    - means (200; 210; 500) for reactivating said filtering function (Filter1) on the basis of a speed of the vehicle.

10. A device according to claim 9, further comprising:

    - means (200; 210; 500) for reactivating said filtering function (Filter1) after a predetermined period of time from said filtering function having been deactivated.

**11.** A device according to either of claims 9 and 10, further comprising

    - means (200; 210; 500) for temporarily reactivating said filtering function (Filter1) to detect an updated deviation (x) between the information generated and corresponding filtered information.

**12.** A device according to any one of claims 9-11, the device being configured to supply the deviation (x) between the information generated and corresponding filtered information to a CUSUM algorithm to make it possible to determine a refuelling state.

**13.** A device according to any one of claims 9-12, further comprising:

    - means (260) for displaying the first information for a driver of the vehicle when said filtering function (Filter1) is deactivated.

**14.** A device according to any one of claims 9-13, further comprising:

    - means (260) for displaying the filtered information for a driver of the vehicle when said filtering function (Filter1) is activated or reactivated.

**15.** A device according to any one of claims 9-14, in which the filtering function (Filter1) is configured to calculate a mean value (MeanV(T)) for a predetermined period of time of said information generated.

**16.** A motor vehicle (100; 110) comprising a device according to any one of claims 9-15.

**17.** A motor vehicle (100; 110) according to claim 16, which vehicle is any from among truck, bus or passenger car.

**18.** A computer programme product comprising a programme code stored on a computer-readable medium for performing the method steps according to any one of claims 1-8, which computer programme is run on an electronic control unit (200; 500) or another computer (210; 500) connected to the electronic control unit (200; 500).

**Patentansprüche**

**1.** Verfahren zur Erkennung und Betrachtung eines Kraftstoffvolumens in einem Tank (280) eines Kraftfahrzeugs (100; 110), umfassend die Schritte:

    - Erzeugen von Information (V(T)) in Bezug auf Kraftstoffvolumina in dem Tank,
    - Bereitstellen einer Filterfunktion (Filter1) zum Ausgleichen von Schwankungen in der erzeugten Information,
    - Reagieren auf ein vorbestimmtes Abweichungsmaß (x) zwischen der erzeugten Information und zugehöriger gefilterter Information durch Deaktivieren der Filterfunktion (Filter1),
    **gekennzeichnet durch** den Schritt
    - Reaktivieren der Filterfunktion (Filter1) basierend auf einer Geschwindigkeit des Fahrzeugs.

**2.** Verfahren nach Anspruch 1, ferner umfassend den Schritt:

    - Reaktivieren der Filterfunktion (Filter1) nach einer vorbestimmten Zeitdauer seit die Filterfunktion (Filter1) deaktiviert worden ist.

**3.** Verfahren nach einem der Ansprüche 1 und 2, ferner umfassend den Schritt

    - vorübergehendes Reaktivieren der Filterfunktion (Filter1) zum Erkennen einer aktualisierten Abweichung (x) zwischen der erzeugten Information und zugehöriger gefilterter Information.

**4.** Verfahren nach einem der vorhergehenden Ansprüche, ferner umfassend den Schritt:

    - Erreichen des vorbestimmten Abweichungsmaßes (x) zwischen der erzeugten Information und zugehöriger gefilterter Information während eines Auftankens des Fahrzeugs.

5. Verfahren nach einem der vorhergehenden Ansprüche, bei dem die Abweichung (x) zwischen der erzeugten Information und zugehöriger gefilterter Information einem CUSUM Algorithmus zugeführt wird, um es zu ermöglichen, einen Befüllungszustand (C2) festzustellen.

6. Verfahren nach einem der vorhergehenden Ansprüche, ferner umfassend den Schritt:

   - Anzeigen der Information für einen Fahrer des Fahrzeugs, wenn die Filterfunktion (Filter1) deaktiviert ist.

7. Verfahren nach einem der vorhergehenden Ansprüche, ferner umfassend den Schritt:

   - Anzeigen der gefilterten Information für einen Fahrer des Fahrzeugs, wenn die Filterfunktion (Filter1) aktiviert oder reaktiviert ist.

8. Verfahren nach einem der vorhergehenden Ansprüche, bei dem die Filterfunktion (Filter1) dazu konfiguriert ist, einen Mittelwert (MeanV(T)) der erzeugten Information für eine vorbestimmte Zeitdauer zu berechnen.

9. Vorrichtung zur Erkennung und Betrachtung eines Kraftstoffvolumens in einem Tank (280) eines Kraftfahrzeugs (100; 110), mit:

   - Mitteln (290; 200; 210) zum Erzeugen von Information in Bezug auf Kraftstoffvolumina in dem Tank (280),
   - Mitteln (200; 210; 500) zum Bereitstellen einer Filterfunktion (Filter1) zum Ausgleichen von Schwankungen der erzeugten Information,
   - Mitteln (200; 210; 500) zum Reagieren auf ein vorbestimmtes Abweichungsmaß (x) zwischen der erzeugten Information und zugehöriger gefilterter Information durch Deaktivieren der Filterfunktion (Filter1),
   **gekennzeichnet durch**
   - Mittel (200; 210; 500) zum Reaktivieren der Filterfunktion (Filter1) basierend auf einer Geschwindigkeit des Fahrzeugs.

10. Vorrichtung nach Anspruch 9, ferner umfassend:

    - Mittel (200; 210; 500) zum Reaktivieren der Filterfunktion (Filter1) nach einer vorbestimmten Zeitdauer seit die Filterfunktion deaktiviert worden ist.

11. Vorrichtung nach einem der Ansprüche 9 und 10, ferner umfassend

    - Mittel (200; 210; 500) zum vorübergehenden Reaktivieren der Filterfunktion (Filter1) zum Erkennen einer aktualisierten Abweichung (x) zwischen der erzeugten Information und zugehöriger gefilterter Information.

12. Vorrichtung nach einem der Ansprüche 9 bis 11, wobei die Vorrichtung dazu eingerichtet ist, die Abweichung (x) zwischen der erzeugten Information und zugehöriger gefilterter Information einem CUSUM Algorithmus zuzuführen, um es zu ermöglichen, einen Befüllungszustand festzustellen.

13. Vorrichtung nach einem der Ansprüche 9 bis 12, ferner umfassend:

    - Mittel (260) zum Anzeigen der ersten Information für einen Fahrer des Fahrzeugs, wenn die Filterfunktion (Filter1) deaktiviert ist.

14. Vorrichtung nach einem der Ansprüche 9 bis 13, ferner umfassend:

    - Mittel (260) zum Anzeigen der gefilterten Information für einen Fahrer des Fahrzeugs, wenn die Filterfunktion (Filter1) aktiviert oder reaktiviert ist.

15. Vorrichtung nach einem der Ansprüche 9 bis 14, bei der die Filterfunktion (Filter1) dazu konfiguriert ist, einen Mittelwert (MeanV(T)) der erzeugten Information für eine vorbestimmte Zeitdauer zu berechnen.

16. Kraftfahrzeug (100; 110), das eine Vorrichtung nach einem der Ansprüche 9 bis 15 aufweist.

**17.** Kraftfahrzeug (100; 110) nach Anspruch 16, wobei das Fahrzeug ein jegliches aus einem Lastwagen, Bus oder PKW ist.

**18.** Computerprogrammprodukt mit einem auf einem computerlesbaren Medium gespeicherten Programmcode zum Durchführen der Verfahrensschritte nach einem der Ansprüche 1 bis 8, wobei das Computerprogramm auf einer elektronischen Steuereinheit (200; 500) oder einem anderen mit der elektronischen Steuereinheit (200; 500) verbundenen Computer (210; 500) ausgeführt wird.

**Revendications**

**1.** Procédé de détection et de visualisation du volume de carburant dans un réservoir (280) d'un véhicule à moteur (100 ; 110), comprenant les étapes consistant en :

- la génération d'informations (V(T)) concernant les volumes de carburant dans ledit réservoir,
- la fourniture d'une fonction de filtrage (Filter1) pour égaliser les variations desdites informations générées,
- en réponse à une quantité prédéterminée de déviation (x) entre les informations générées et les informations filtrées correspondantes, désactiver ladite fonction de filtrage (Filter1), **caractérisé par** l'étape consistant en :
- réactivation de ladite fonction de filtrage (Filter1) sur la base d'une vitesse du véhicule.

**2.** Procédé selon la revendication 1, comprenant en outre l'étape de :

- la réactivation de ladite fonction de filtrage (Filter1) après une période de temps prédéterminée à partir du moment où ladite fonction de filtrage (Filter1) a été désactivée.

**3.** Procédé selon l'une ou l'autre des revendications 1 et 2, comprenant en outre l'étape consistant en

- la réactivation temporaire de ladite fonction de filtrage (Filter1) pour détecter un écart actualisé (x) entre les informations générées et les informations filtrées correspondantes.

**4.** Procédé selon l'une quelconque des revendications précédentes, comprenant en outre l'étape consistant en :

- l'atteinte de ladite quantité prédéterminée d'écart (x) entre les informations générées et les informations filtrées correspondantes pendant le ravitaillement du véhicule.

**5.** Procédé selon l'une quelconque des revendications précédentes, dans lequel l'écart (x) entre les informations générées et les informations filtrées correspondantes est fourni à un algorithme CUSUM pour permettre de déterminer un état de ravitaillement (C2).

**6.** Procédé selon l'une quelconque des revendications précédentes, comprenant en outre l'étape consistant en :

- l'affichage des informations pour un conducteur du véhicule lorsque ladite fonction de filtrage (Filter1) est désactivée.

**7.** Procédé selon l'une quelconque des revendications précédentes, comprenant en outre l'étape consistant en :

- l'affichage des informations filtrées pour un conducteur du véhicule lorsque ladite fonction de filtrage (Filter1) est activée ou réactivée.

**8.** Procédé selon l'une quelconque des revendications précédentes, dans lequel la fonction de filtrage (Filter1) est configurée pour calculer une valeur moyenne (MeanV(T)) pour une période de temps prédéterminée de ladite information générée.

**9.** Dispositif de détection et de visualisation du volume de carburant dans un réservoir (280) d'un véhicule à moteur (100 ; 110), comprenant :

- des moyens (290 ; 200 ; 210) pour la générations des informations concernant les volumes de carburant dans ledit réservoir (280),

- des moyens (200 ; 210 ; 500) pour la fourniture d'une fonction de filtrage (Filter1) pour égaliser les variations desdites informations générées,
- des moyens (200 ; 210 ; 500) en réponse à une quantité prédéterminée de déviation (x) entre les informations générées et les informations filtrées correspondantes, désactiver ladite fonction de filtrage (Filter1),

**caractérisé par**

- des moyens (200 ; 210 ; 500) pour la réactivation de ladite fonction de filtrage (Filter1) sur la base d'une vitesse du véhicule.

10. Dispositif selon la revendication 9, comprenant en outre :

- des moyens (200 ; 210 ; 500) pour la réactivation de ladite fonction de filtrage (Filter1) après une période de temps prédéterminée à partir du moment où ladite fonction de filtrage a été désactivée.

11. Dispositif selon l'une quelconque des revendications 9 et 10, comprenant en outre

- des moyens (200 ; 210 ; 500) pour la réactivation temporaire de ladite fonction de filtrage (Filter1) pour détecter un écart actualisé (x) entre les informations générées et les informations filtrées correspondantes.

12. Système selon l'une quelconque des revendications 9 à 11, le dispositif étant configuré pour fournir l'écart (x) entre les informations générées et les informations filtrées correspondantes à un algorithme CUSUM pour permettre de déterminer un état de ravitaillement.

13. Dispositif selon l'une quelconque des revendications 9 à 12, comprenant en outre :

- des moyens (260) pour l'affichage des premières informations pour un conducteur du véhicule lorsque ladite fonction de filtrage (Filter1) est désactivée.

14. Dispositif selon l'une quelconque des revendications 9 à 13, comprenant en outre :

- des moyens (260) pour l'affichage des informations filtrées pour un conducteur du véhicule lorsque ladite fonction de filtrage (Filter1) est activée ou réactivée.

15. Dispositif selon l'une quelconque des revendications 9 à 14, dans lequel la fonction de filtrage (Filter1) est configurée pour calculer une valeur moyenne (MeanV(T)) pour une période de temps prédéterminée de ladite information générée.

16. Véhicule à moteur (100 ; 110) comprenant un dispositif selon l'une quelconque des revendications 9 à 15.

17. Véhicule à moteur (100 ; 110) selon la revendication 16, lequel véhicule est l'un quelconque d'un camion, d'un bus ou d'une voiture particulière.

18. Produit de programme informatique contenant un code de programme stocké sur un support lisible par ordinateur pour l'exécution des étapes du procédé selon l'une quelconque des revendications 1 à 8 dont ledit programme informatique est exécuté sur une unité de commande électronique (200 ; 500) ou sur un autre ordinateur (210 ; 500) connecté à l'unité de commande électronique (200 ; 500).

100

110

112

# Fig. 1

299

290

280

Slev

291

Slev*

260

261

200

Sv

250

215

251

210

# Fig. 2

Fig. 3a

Fig. 3b

Fig. 3c

## Fig. 3d

## Fig. 3e

## Fig. 3f

Fig. 4a

Fig. 4b

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2181873 A
- US 6925855 B2
- FR 2786738